# EUROPÄISCHE PATENTSCHRIFT

(11) **EP 1 594 665 B1**
(45) Veröffentlichungstag und Bekanntmachung des Hinweises auf die Patenterteilung: **02.01.2008**
(21) Anmeldenummer: 04711578.7
(22) Anmeldetag: 17.02.2004
(51) Int. Cl.: B27B 17/00, B23D 59/00

(54) **MOTORSÄGE MIT ANZEIGEGERÄT**
POWER SAW COMPRISING A DISPLAY DEVICE
TRONCONNEUSE A DISPOSITIF D'AFFICHAGE

(30) Priorität: 17.02.2003 DE 10306729; 25.07.2003 DE 10334289
(43) Veröffentlichungstag der Anmeldung: 16.11.2005
(73) Patentinhaber: Isele, Siegfried, 76761 Waldshut (DE)
(72) Erfinder: ISELE, Siegfried, D-79761 Waldshut (DE); BASLER, Ralf, D-71761 Waldshut (DE)
(74) Vertreter: Bergmeier, Werner
(86) Internationale Anmeldenummer: PCT/EP2004/001495
(87) Internationale Veröffentlichungsnummer: WO 2004/071726

(56) Entgegenhaltungen:
- US-A- 4 388 762
- US-A1- 2002 069 542
- US-B1- 6 295 738

## Beschreibung

Die vorliegende Erfindung betrifft ein Anzeigegerät gemäß Oberbegriff des Anspruches 1, sowie die Verwendung eines entsprechenden Anzeigegerätes an eine Motorsäge gemäß Anspruch 15.

Aus der DE 199 04 679 A1 ist eine laserjustierte Messhilfe für Wald- und Forstarbeiter bekannt. Die dort offenbarte Messhilfe soll einen Ablängmessstab, ein Messband oder einen Kluppmessstock ersetzen. Es werden hierfür zwei Laserpointer winklig zueinander in einer Halterung angeordnet.
Die Laserstrahlen bilden dabei eine Art Distanzzirkel, mit welchem unter einem vorbestimmten Abstand der Halterung zu dem zu vermessenden Holzstück eine definierte Länge abzugreifen ist. Die Halterung wird hierfür beispielsweise an einem Gürtel befestigt und auf die jeweilige Höhe des Gürtels vom Untergrund eingestellt bzw. justiert. Bei dieser Messhilfe werden zwei Laser benötigt. An der Halterung muss für eine definierte Abstandsmessung sowohl die Höhe der Anordnung der Halterung als auch der Winkel zwischen den beiden Lasern eingestellt werden. Schwierig ist dies insbesondere bei Arbeiten an einem Hang.

Aus der DE 197 08 467 A1 ist ein Gerät zum indirekten sowie mehrdimensionalen Vermessen und eine Positionshilfe zum Zeigen von Soll-Positionen bekannt. Das zirkelartige Entfernungsmessgerät weist einen mechanischen sowie einen optischen Schenkel auf. Der Winkel zwischen dem mechanischen Objektschenkel und der Sensorachse, welche den optischen Schenkel darstellt, ist einstellbar. Nachteilig bei diesem Handmessgerät ist es, dass zwar eine bestimmte Distanz ähnlich wie bei einem Ablängmessstab anzeigbar ist, dass an dem zu messenden Werkstück jedoch die Anfangs- und Endpunkte der Distanz beispielsweise mit einem Stift markiert werden müssen. In einem weiteren Arbeitsschritt muss das Werkzeug von dem Arbeiter aufgenommen werden und das Werkstück bearbeitet werden.

Die beschriebenen Hilfsmittel sind neben anderen Nachteilen nicht besonders bedienerfreundlich. Werden beispielsweise Baumstämme abgelängt, so muss das voreingestellte Maß, beispielsweise 1 Meter, zuerst mit dem Hilfsgerät und ggf. einem Stift oder einer anderen Markiereinrichtung gekennzeichnet werden. Anschließend muss das Werkzeug in die Hand genommen und der Baumstamm auf das erforderliche Maß abgelängt werden. Anschließend wird wieder das Messwerkzeug angesetzt, die Markierung durchgeführt und der Baumstamm wieder abgelängt u.s.w. Dies erfordert einen beträchtlichen Zeitaufwand und ist für die Arbeiter beschwerlich.

Aus der US 2002/0069542 A1 ist eine Motorsäge bekannt, welche einen Laser zur Markierung einer bestimmten Länge des abzuschneidenden Baumstammes aufweist. Der Laser ist auf einer Seite der Motorsäge angeordnet. Das Ablängen des Stammes kann daher nur von einer Seite her erfolgen. Außerdem ist er an einer sehr exponierten Stelle der Säge angeordnet und ist daher nicht geeignet den rauhen Bedingungen bei der Waldarbeit zu widerstehen.

Aufgabe der vorliegenden Erfindung ist es somit, ein Anzeigegerät zu schaffen, welches insbesondere an Motorsägen unterschiedlicher Hersteller montierbar ist und ein schnelles und komfortables Bearbeiten eines Werkstückes in regelmäßigen Abständen unter harten Umgebungsbedingungen erlaubt.

Die Aufgabe wird gelöst durch ein Anzeigegerät mit den Merkmalen des Anspruchs 1, sowie die Verwendung eines entsprechenden Anzeigegerätes an einer Motorsäge gemäß Auspruch 15.

Erfindungsgemäß ist ein Anzeigegerät an einer Motorsäge angeordnet, welche ein Sägeschwert als Werkzeug, einen Griff in Verlängerung des Werkzeuges und einen im wesentlichen quer zum Werkzeug angeordneten Griff zum Halten der Motorsäge aufweist. Das Anzeigegerät mit einem Laser mit einem aktivierbaren Laserstrahl ist an dem vom Werkzeug abgewandten Ende und/oder unterhalb des Griffes angeordnet. Der Laserstrahl ist an der Motorsäge in einem Winkel (α) von mehr als 0° und weniger als 90°, vorzugsweise weniger als 45° zu der Werkzeugachse ausgerichtet und der Laserstrahl und/oder der Laser ist wahlweise nach der einen oder der anderen Seite der Werkzeugachse gerichtet. Das Anzeigegerät selbst weist einen Adapter und einen Laserträger auf, wodurch er auch nachträglich an einer Motorsäge montierbar ist. Der Laserträger nimmt dabei die wesentlichen Bauteile des Anzeigegerätes auf, während der Adapter die Verbindung zu der Motorsäge bildet. Durch verschiedene Adapter kann das selbe Anzeigegerät für verschiedene Motorsägen eingesetzt werden.

Der Laser markiert durch den Laserstrahl an dem Werkstück mit einem einem Strich eine bestimmte Distanz zwischen dem Werkzeug und der Auftreffstelle des Lasers auf dem Werkstück. Durch einen bestimmten Winkel des Lasers bzw. des Laserstrahls zur Werkzeugachse wird eine bestimmte Distanz festgelegt. Hierdurch ist beispielsweise das Ablängen in einem Werkstück sehr schnell durchzuführen, da der Laserstrich lediglich an der letzen Bearbeitungsstelle oder einer vorgegebenen Stelle an dem Werkstück positioniert werden muss und das Werkzeug dadurch in dem vorbestimmten Abstand angeordnet ist. Es ist hierdurch besonders schnell und einfach möglich beispielsweise Baumstämme in vorbestimmte Abschnitte zu unterteilen. Der Laserstrich dient darüber hinaus zur genauen Positionierung der Motorsäge im rechten Winkel und in der richtigen Achse. Wenn die Säge nicht ordnungsgemäß ausgerichtet ist, verschwindet der Strich vom Baumstamm und dient damit als Signal für besseres Ausrichten der Säge bezüglich des Baumstammes.

Ist der Laserstrahl und/oder der Laser wahlweise nach der einen oder der anderen Seite der Werkzeugachse gerichtet, so kann sehr schnell das eingestellte Maß links oder rechts von der Motorsäge angelegt werden. Eine sehr flexible Bearbeitung ist dadurch möglich.

Ist der Laser in dem Werkzeuggriff der Werkzeugmaschine fest oder anbaubar angeordnet, so kann der Laser stets mit der Werkzeugmaschine transportiert werden und bei Bedarf eingeschaltet werden. Die Werkzeugmaschine kann durch die erfindungsgemäße Anzeigevorrichtung hinsichtlich ihres Nutzwertes deutlich aufgewertet werden. Auch bestehende Werkzeugmaschinen können durch einen Austausch des alten Werkzeuggriffes mit dem neuen, das Anzeigegerät beinhaltenden Werkzeuggriff in ihrer Anwendung wesentlich verbessert werden. Auch ist es möglich, dass das Anzeigegerät als Zusatzbauteil an den bestehenden Griff oder ein anderes geeignetes Bauteil der Werkzeugmaschine angebaut wird.

Das Motorsägenblatt muss lediglich im wesentlichen rechtwinklig an dem Baumstamm angepeilt werden, um im wesentlichen die vorbestimmte Distanz einzuhalten. Besonders unkritisch gegenüber dem richtigen Ansetzen des Werkzeuges an dem Werkstück ist es, wenn der Winkel zwischen Werkzeugachse und Laserstrahl zwischen 0° und 45° beträgt. Hierdurch ist eine geringe Abweichung der rechtwinkligen Positionierung des Motorsägenblattes zu dem Baumstamm weitgehend unkritisch, da es sich auf die vorbestimmte Distanz kaum auswirkt. Auch andere Anpeilungen sind denkbar. Z. B. kann der Baumstamm an die Kralle der Motorsäge angesetzt werden. Die Einstellung und das Sägen muss jedenfalls in gleicher Weise erfolgen.

Ist der Strahl und/oder der Laser durch Drehung um einen in der Werkzeugachse angeordneten Drehpunkt wahlweise nach der einen oder der anderen Seite der Werkzeugachse gerichtet, so kann der Wechsel der Messseite sehr schnell erfolgen.

Um einen sehr einfachen Einbau des Anzeigegerätes in der Motorsäge oder einem Gehäuse, welches wahlweise an die Motorsäge angebaut wird, zu erhalten, ist der Laserstrahl mit einem Spiegel umgelenkt. Der Laser selbst ist dabei fest installiert. Durch Drehung des Spiegels ist die Messlänge und die Messseite des Laserstrahls einstellbar.

Ist der Laser mit einem Tippschalter betätigt, so kann ein starker Laser verwendet werden, der gut sichtbar ist, da eine Gesundheitsschädigung durch unbeabsichtigtes Anstrahlen eines Menschen weitgehend vermieden wird. Darüber hinaus ist der Batterieverbrauch gegenüber einem permanenten Ein/Aus-Schalter geringer, da er nur bei Bedarf und nur bei aktivem Drücken des Schalters betätigt wird.

Vorteilhafterweise ist der Laser bezüglich seines Winkels einstellbar an einem Halter angeordnet. Hierdurch ist es möglich, dass verschiedene Distanzen eingestellt werden, welche zwischen dem Werkzeug und der Auftreffstelle des Laserstrahls auf dem Werkstück liegen.

Besonders hilfreich ist es, wenn an dem Halter Markierungen und/oder Rasterungen vorgesehen sind, welche eine bestimmte Distanz angeben. Die Einstellung des benötigten Winkels in Abhängigkeit von der gewünschten Distanz ist hierdurch besonders schnell durchzuführen. Es kann auch ein Anschlag gesetzt werden um voreingestellte Längen abgreifen zu können.

Ist der Halter selbst, ggf. zusätzlich zur Drehbarkeit des Lasers an dem Halter, drehbar gelagert und ist die Drehachse vorzugsweise in der Werkzeugachse, so kann beispielsweise auf unterschiedliche Werkzeuglängen das Anzeigegerät eingestellt werden. Die in dem Halter angeordnete Skala für bestimmte Distanzen kann jedoch beibehalten bleiben.

Besonders vorteilhaft und erfinderisch ist es, wenn der Halter umstellbar an der Werkzeugmaschine angeordnet ist, um unter Beibehaltung des eingestellten Winkels den Laserstrahl wahlweise auf einer der beiden Seiten der Werkzeugmaschine anzuzeigen. Das Umschalten des Halters kann entweder mittels der zuvor beschriebenen drehbaren Lagerung des Halters erfolgen oder durch Anschläge, welche es erlauben, dass der Halter bzgl. der Werkzeugachse spiegelverkehrt eingesetzt werden kann. Durch dieses besonders vorteilhafte Merkmal der Erfindung ist es möglich die Arbeitsrichtung umzukehren. So kann die Anzeigevorrichtung im einen Fall links und im anderen Fall rechts der Werkzeugmaschine an dem Werkstück die Markierungsstelle als Strich anzeigen. Je nach Richtung, in welcher der Baumstamm zerlegt werden soll, kann der letzte Schnitt als Orientierung für den Laser strich dienen.

Ist die Richtung des Laserstrahls und/oder des Lasers mit einem Drehknopf verstellbar so ist eine besonders einfache und kompakte Bauweise ermöglicht.

Vorteilhafterweise ist der Laser stoß- und/oder vibrationsgeschützt in der Motorsäge angeordnet. Hier wird eine Beschädigung des Lasers auch im harten Einsatz, beispielsweise bei Waldarbeiten sichergestellt.

Um störende Einflüsse der Werkzeugmaschine auf den Laser zu vermeiden, ist es vorteilhaft, wenn der Laser in einem möglichst großen Abstand von dem Antrieb der Werkzeugmaschine angeordnet ist. Wärme und elektrische Felder des Antriebs der Werkzeugmaschine wirken sich hierdurch kaum mehr auf den Laser aus.

Besonders vorteilhaft ist es, wenn der Laser an dem von der Spitze des Werkzeuges abgewandten Ende der Motorsäge angeordnet ist. Hierdurch wird eine relativ große Distanz des Lasers von der Bearbeitungsstelle erzeugt, wodurch die Messgenauigkeit des Anzeigegerätes verbessert wird.

Dadurch, dass der Laser ein Strichlaser ist, kann eine sehr genaue und deutliche Anzeige des Messstrahles an einem zu schneidenden Werkstück erhalten werden.

Ist der Laser in einer Gehäusenische der Motorsäge als Anbauteil oder als integriertes Bauteil angeordnet, ist ein besonders guter Schutz der Anzeigevorrichtung gegeben.

Wenn der Adapter eine mit dem Laserträger korrespondierende Dreheinrichtung aufweist, so kann der Adapter fest an der Motorsäge installiert werden und der Laserträger um den Adapter als Basis in die gewünschte Position und damit in den gewünschten Abstand des Auftreffpunktes des Laserstrahles auf das Schnittgut gedreht werden.

Vorteilhafterweise ist an dem Laserträger die Stromversorgung und/oder der Schalter angeordnet. Es handelt sich dabei um ein weitgehend selbständiges Bauteil, das an beliebigen Motorsägen angebaut werden kann.

Umschließt der Laserträger den Adapter, so kann dieser als Drehachse des Laserträger dienen. Es handelt sich dabei um eine besonders einfache, vielseitige und kostengünstige Ausführung der Erfindung. Es ist von jedermann montier- und demontierbar.

Wenn der Laserträger teilbar ausgebildet ist, kann er einfach von dem Adapter und der Motorsäge entfernt werden, indem der Laserträger geteilt wird und von dem Adapter abgezogen wird. Zum erneuten Befestigen des Laserträgers an dem Adapter wird er wieder um den Adapter herum gelegt und fixiert.

In einer ergonomisch besonders günstigen Ausführung der Erfindung ist der Schalter nicht an dem Laserträger, sondern am Griff oder Halter angeordnet. Der Schalter kann in diesem Fall bei Bedarf beispielsweise mit dem Daumen betätigt werden. Wird der Laser nicht benötigt, also beispielsweise, nachdem mit der Säge bereits eine Markierung an dem Schnittgut erzeugt wurde, so kann der Laser wieder ausgeschaltet oder losgelassen werden, wenn es sich um einen Tippschalter handelt. Dies spart Stromverbrauch und verlängert die Lebensdauer des Lasers.

Weitere Vorteile der Erfindung sind in dem nachfolgenden Ausführungsbeispiel beschrieben. Es zeigt die
- **Figur 1**: eine Motorsäge mit einem Anzeigegerät,
- **Figur 2**: ein in einem Griff integriertes Anzeigegerät,
- **Figur 3**: ein weiteres in einem Griff integriertes Anzeigegerät und
- **Figur 4**: ein Anzeigegerät mit Laserträger und Adapter.

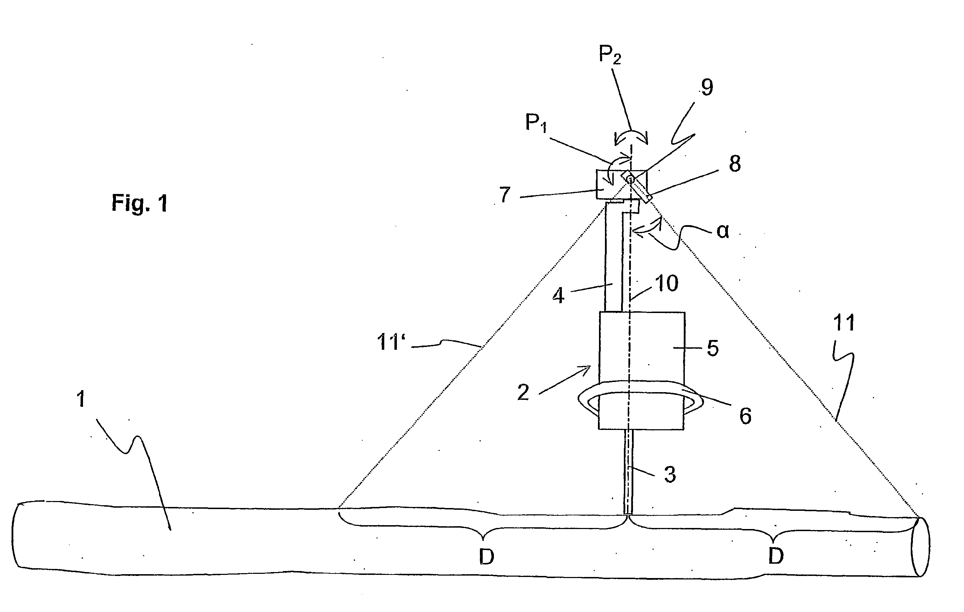

Der Figur 1 ist ein skizzierter Baumstamm 1 und eine Motorsäge 2 zu entnehmen. Die Motorsäge 2 besteht aus einem Sägeschwert 3, einem ersten Griff 4 und einem dazwischen angeordneten Motor 5. Zum besseren Halten der Motorsäge 2 ist an dem Motor 5 bzw. dessen Gehäuse ein zweiter Griff 6 angeordnet. An dem von dem Sägeschwert 3 abgewandten Ende der Motorsäge 2 ist an dem ersten Griff 4 ein Halter 7 vorgesehen.

Ein Laser 8 ist an dem Halter 7 befestigt. Der Laser 8 ist mittels einer Drehachse 9 in Pfeilrichtung P₁ drehbar gelagert, um zu einer Achse 10, welche durch das Sägeschwert 3 hindurch verläuft, einen vorbestimmten Winkel α einnehmen zu können. Der Winkel α wird schließlich mit einer nicht dargestellten Klemmvorrichtung, beispielsweise einer Schraube oder einem Schnellspanner fixiert.

Der aus dem Laser 8 austretende Laserstrahl 11 trifft im dargestellten Ausführungsbeispiel auf das Ende des Baumstammes 1. Durch den Winkel α und den fest eingestellten Abstand von der Spitze des Sägeschwerts 3 bis zur Drehachse 9 wird eine vorbestimmte Distanz D zwischen der Auftreffstelle des Laserstrahles und der Spitze des Sägeschwertes 3 festgelegt. Durch das Anvisieren des Stammendes mit dem Laserstrahl 11 wird somit durch den eingestellten Winkel α die gewünschte vorbestimmte Distanz D des Sägeschwerts 3 vom Stammende erhalten. Der Bediener der Motorsäge 2 muss somit lediglich auf die Auftreffstelle, nämlich den Auftreffpunkt oder Auftreffstrich des Laserstrahls 11 auf dem Baumstamm 1 achten, um von dieser Stelle ausgehend den definierten und gewünschten Abstand D für den aktuellen Sägeschnitt zu erhalten.

Wird eine geänderte Distanz D gewünscht, so kann durch eine Drehung des Lasers 8 um die Drehachse 9 der Winkel α verändert werden. Durch erneutes Fixieren kann der hier dargestellte Baumstamm 1 mit dem neuen Maß abgeschnitten werden.

Während die hier dargestellte Ausführung den Schnitt links von dem Baumstammende zeigt, kann es in einigen Anwendungsfällen auch gewünscht sein von dem linken Baumstammende aus den Baumstamm abzulängen. Um die eingestellte Distanz D beibehalten zu können, ist es daher vorgesehen, dass der Halter 7 um die Achse 10 schwenkbar gelagert ist. Durch dieses Umschlagen des Halters 7 zusammen mit dem Laser 8 wird der Winkel α beibehalten. Der Laserstrahl 11 wird jedoch auf die andere Seite der Motorsäge 2 gerichtet und erzeugt den Laserstrahl 11'. Auch hierdurch wird wieder die Distanz D erhalten, da der Winkel α durch das Umschlagen des Halters 7 in Pfeilrichtung P₂ umgeschlagen wurde.

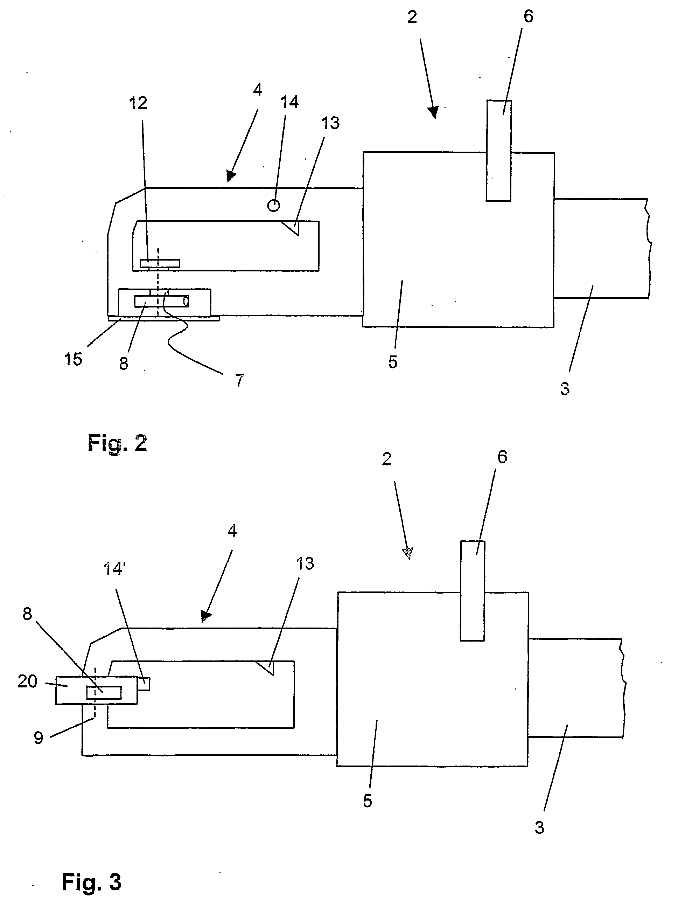

In Figur 2 ist in einem weiteren Ausführungsbeispiel ein Ausschnitt einer Motorsäge 2 dargestellt, bei welcher in den ersten Griff 4 das Anzeigegerät eingebaut ist. Dies kann entweder standardmäßig zur Ausstattung der Motorsäge 2 erfolgen oder als Sonderausstattung gegebenenfalls nachträglich an die Motorsäge 2 angebaut sein. Das Anzeigegerät ist dabei am unteren hinteren Ende des ersten Griffes 4 angeordnet. In diesem Ausführungsbeispiel befindet es sich geschützt in einer Nische des ersten Griffes 4.

Der Laser 8 ist an dem Halter 7 befestigt. Der Halter 7 ist mittels eines Drehknopfes 12 zusammen mit dem Laser 8 verdrehbar, so dass unterschiedliche Abstände oder Seiten der Anzeige eingestellt werden können. Falls ein besonders guter Schutz des Lasers 8 gewünscht wird, kann unterhalb des Lasers 8 eine Abdeckung 15 angeordnet werden.

In der Nähe eines Startknopfes 13 der Motorsäge 2 ist ein Tippschalter 14 zum Betätigen des Lasers angeordnet. Nur wenn der Tippschalter 14 gedrückt gehalten wird, wird der Laser 8 aktiviert. Dies reduziert den Stromverbrauch des Lasers 8 und erhöht die Bediensicherheit.

An Stelle des Lasers 8 kann an dem Halter 7 auch ein Spiegel angeordnet sein, der mit dem Drehknopf 12 verdrehbar ist. Der Laser ist in diesem Ausführungsbeispiel fest und stationär beispielsweise in dem ersten Griff 4 angeordnet. Der Laserstrahl wird von dem Spiegel in gewünschter Weise umgelenkt.

Figur 3 zeigt ein weiteres Ausführungsbeispiel, bei welchem an dem hinteren Ende des ersten Griffes 4 das Anzeigegerät angebaut ist. Das Anzeigegerät besteht bei diesem Ausführungsbeispiel aus einem Laserträger 20, an welchem der Laser 8 befestigt ist. An dem Laserträger 20 ist darüber hinaus ein Schalter 14' angeordnet, mit welchem der Laser 8 bei Bedarf betätigt werden kann. Vorzugsweise ist der Schalter 14' so ausgeführt, dass er nur bei aktiver Betätigung den Laser 8 mit Strom versorgt. Durch kurzzeitiges Antippen des Schalters 14' wird der Laser 8 zur Festlegung der Länge des Schnittgutes betätigt.

Der Laserträger 20 ist um die Drehachse 9 drehbar. Die Drehachse 9 ist in dem ersten Griff 4 vorgesehen. Der Laserhalter 20 dreht sich somit um das hintere Ende des ersten Griffes 4, wenn entweder die abzulängende Länge eingestellt werden soll, oder wenn die zu markierende Seite der Motorsäge 2 gewechselt werden soll.

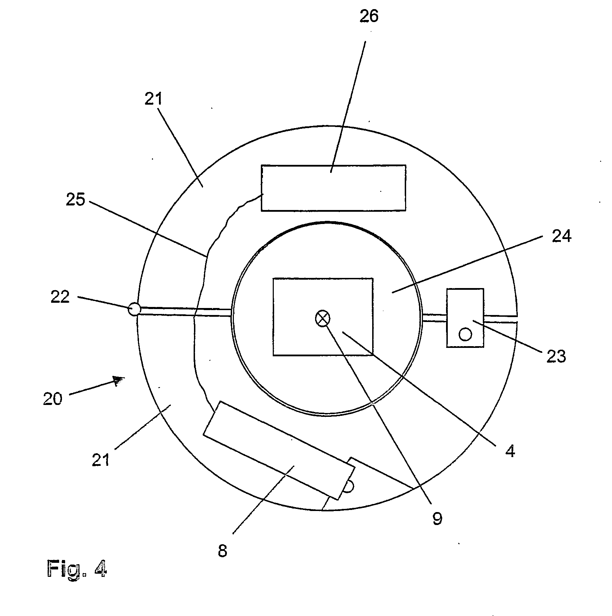

In Figur 4 ist der Laserträger 20 detaillierter dargestellt. Der Laserträger 20 besteht in dem vorliegenden Ausführungsbeispiel aus zwei Hälften 21, welche mit einem Scharnier 22 miteinander verbunden sind. Die zwei Hälften 21 sind mit einem Verschluss 23 in einer Stellung gehalten, in welcher sie einen Adapter 24 umschließen. Der Adapter 24 weist einen kreisrunden Außenumfang auf, welcher mit dem Innenumfang des Laserträgers 20 korrespondiert. Der Laserträger 20 kann somit um den Adapter 24 gedreht werden. Zur Fixierung kann vorgesehen sein, dass eine Befestigung zwischen Laserhalter 20 und Adapter 24 angeordnet ist, es können Einrastungen vorgesehen sein, damit vordefinierte Abstände des Lasers 8 von der Säge 2 einfach eingestellt werden können, oder es kann eine Klemmung der beiden Hälften 21 gegenüber dem Adapter 24 so stark erfolgen, dass eine unbeabsichtigte Verdrehung des Laserhalters 20 um den Adapter 24 nicht erfolgen kann.

In dem Laserhalter 20 ist der Laser 8 und über ein Kabel 25 eine Verbindung mit einer Batterie 26 vorhanden. Ein Schalter ist bei der vorliegenden Skizze nicht eingezeichnet. Er kann sich entweder an dem Laserhalter 20 selbst befinden oder, wie in den vorherigen Ausführungsbeispielen bereits beschrieben, an dem ersten Griff 4 angeordnet sein.

Der Adapter 24 befindet sich in Verbindung mit dem ersten Griff 4. Hierzu weist der Adapter 24 eine Aussparung, welche dem Querschnitt des ersten Griffes 4 entspricht, auf. Zur Befestigung des Adapters 24 an dem ersten Griff 4 kann entweder eine Schraubverbindung, Klebverbindung oder eine sonstige Fixierung vorgesehen sein. Die Öffnung des Adapters 24 entspricht im wesentlichen dem Querschnitt des ersten Griffes 4. Je nach Sägenhersteller oder Sägentyp sind hierbei verschiedene Adapter 24 vorzusehen. Trotz der unterschiedlichen Aussparungen für die verschiedenen ersten Griffe 4 ist der Außenumfang des Adapters 24 jeweils gleich, so dass er mit dem Laserhalter 20 korrespondiert und dieser universell einsetzbar ist. Zum Anbringen und Entfernen des Adapters 24 an dem ersten Griff 4 kann der Adapter 24 auch geteilt ausgebildet sein.

Der Adapter kann auch aus einem aushärtbaren Material hergestellt sein, das um den Griff herum grob geformt ist, mit dem Laserhalter in Verbindung gebracht und in dieser Stellung ausgehärtet wird. Eine individuelle Anpassung an beliebige Motorsägen wird damit erreicht.

## Patentansprüche

1. Anzeigegerät zur Befestigung an einer Motorsäge (2), welche ein Sägeschwert (3) als Werkzeug, einen ersten Griff (4) in Verlängerung des Werkzeuges und einen im wesentlichen quer zum Werkzeug angeordneten zweiten Griff (6) zum Halten der Motorsäge (2) aufweist,
- wobei das Anzeigegerät mit einem Laser (8) mit einem aktivierbaren Laserstrahl ausgestattet ist,
- der an der Motorsäge (2) in einem Winkel (α) von mehr als 0° und weniger als 90°, vorzugsweise weniger als 45° zu der Werkzeugachse (10) ausgerichtet ist, und
- das Anzeigegerät einen Laserträger (20) beinhaltet,
**dadurch gekennzeichnet,**
- **dass** das Anzeigegerät einen Adapter (24) aufweist, der lösbar mit dem Laserträger (20) verbunden ist und zum Befestigen des Lasers (8) an dem vom Werkzeug abgewandten Ende am ersten Griff (4) ausgebildet ist,
- **dass** der Laserstrahl und/oder der Laser (8) wahlweise nach der einen oder der anderen Seite der Werkzeugachse (10) ausrichtbar ist, und
- **dass** der Laser (8) ein Strichlaser ist.

2. Anzeigegerät nach Anspruch 1, **dadurch gekennzeichnet, dass** der Laserstrahl mit einem Spiegel umgelenkt ist.

3. Anzeigegerät nach einem der vorherigen Ansprüche, **dadurch gekennzeichnet, dass** der Laser (8) mit einem Tippschalter (14) betätigt ist.

4. Anzeigegerät nach einem der vorherigen Ansprüche, **dadurch gekennzeichnet, dass** der Laser (8) bezüglich seines Winkels(a) einstellbar an einem Halter (7) angeordnet ist.

5. Anzeigegerät nach einem der vorherigen Ansprüche, **dadurch gekennzeichnet, dass** an dem Halter (7) Markierungen und/oder Rasterungen zur Einstellung des Winkels(a) bzw. einer vorbestimmten Distanz (D) angeordnet sind.

6. Anzeigegerät nach einem der vorherigen Ansprüche, **dadurch gekennzeichnet, dass** der Halter (7) drehbar gelagert ist und die Drehachse (9) vorzugsweise in der Werkzeugachse (10) liegt.

7. Anzeigegerät nach einem der vorherigen Ansprüche, **dadurch gekennzeichnet, dass** der Halter (7) umstellbar angeordnet ist, um unter Beibehaltung des eingestellten Winkels (7) den Laserstrahl (11,11') wahlweise auf einer der beiden Seiten der Motorsäge (2) anzuzeigen.

8. Anzeigegerät nach einem der vorherigen Ansprüche, **dadurch gekennzeichnet, dass** die Richtung des Laserstrahls und/oder des Lasers (8) mit einem Drehknopf verstellbar ist.

9. Anzeigegerät nach einem der vorherigen Ansprüche, **dadurch gekennzeichnet, dass** der Laser (8) stoss- und/oder vibrationsgeschützt an der Motorsäge(2) angeordnet ist.

10. Anzeigegerät nach einem der vorherigen Ansprüche, **dadurch gekennzeichnet, dass** der Adapter (24) eine mit dem Laserträger (20) korrespondierende Dreheinrichtung aufweist.

11. Anzeigegerät nach einem der vorherigen Ansprüche, **dadurch gekennzeichnet, dass** an dem Laserträger (20) Stromversorgung und/oder Schalter (14) angeordnet sind.

12. Anzeigegerät nach einem der vorherigen Ansprüche, **dadurch gekennzeichnet, dass** der Laserträger (20) den Adapter (24) umschliesst.

13. Anzeigegerät nach einem der vorherigen Ansprüche, **dadurch gekennzeichnet, dass** der Laserträger (20) teilbar ausgebildet ist.

14. Anzeigegerät nach einem der vorherigen Ansprüche, **dadurch gekennzeichnet, dass** der Tippschalter (14) ergonomisch günstig am Halter (7) angeordnet ist.

15. Verwendung eines Anzeigegerätes nach einem der Anspruche 1 bis 14 an einer Motorsäge (2), welche ein Sägeschwert (3) als Werkzeug, einen ersten Griff (4) in Verlängerung des Werkzeuges und einen im wesentlichen quer zum Werkzeug angeordneten zweiten Griff (6) zum Halten der Motorsäge (2) aufweist.

16. Verwendung nach Anspruch 15, **dadurch gekennzeichnet, dass** der Laserstrahl und/oder der Laser (8) durch Drehung um einen in der Werkzeugachse (10) angeordneten Drehpunkt wahlweise nach der einen oder der anderen Seite der Werkzeugachse (10) gerichtet ist.

17. Verwendung nach einem der vorherigen Ansprüche, **dadurch gekennzeichnet, dass** der Laser (8) in einem grossen Abstand von dem Motor (5) der Motorsäge (2) angeordnet ist.

18. Verwendung einem der vorherigen Ansprüche, **dadurch gekennzeichnet, dass** der Laser (8) an dem von der Spitze des Werkzeuges (3) abgewandten Ende der Motorsäge (2) angeordnet ist.

19. Verwendung nach einem der vorherigen Ansprüche, **dadurch gekennzeichnet, dass** der Laser (8) in einer Gehäusenische der Motorsäge (2) angeordnet ist.

20. Verwendung nach einem der vorherigen Ansprüche, **dadurch gekennzeichnet, dass** der Tippschalter 14 ergonomisch günstig am ersten Griff (4) angeordnet ist.

## Claims

1. A display device to be attached to a motor saw (2) comprising a saw blade (3) as tool, a first handle (4) in an extension of the tool and a second handle (6) arranged substantially transversely to the tool for holding the motor saw (2),
- which display device is equipped with a laser (8) with an actuatable laser beam,
- which is aligned on the motor saw (2) at an angle (α) of more than 0° and less than 90°, preferably less than 45° to the tool axis (10) and
- which display device comprises a laser carrier (20)
**characterized in**
- **that** the display device comprises an adapter (24), which is connected detachably to the laser carrier (20) and is designed to fasten the laser (8) to the first handle (4) at the end facing away from the tool,
- **that** the laser beam and/or the laser (8) is/are can selectively be directed to the one or the other side of the tool axis (10) and
- **that** the laser (8) is a line laser.

2. The display device according claim 1, **characterized in that** the laser beam is deflected with a mirror.

3. The display device according to one of the previous claims, **characterized in that** the laser (8) is actuated by a touch-control switch (14).

4. The display device according to one of the previous claims, **characterized in that** the laser (8) is adjustably arranged on a holder (7) as regards its angle (α).

5. The display device according to one of the previous claims, **characterized in that** markings and/or click notches are arranged on the holder (7) for adjusting the angle (α) or a predetermined distance (D).

6. The display device according to one of the previous claims, **characterized in that** the holder (7) is rotatably mounted and that the swivel pin (9) is preferably located in the tool axis (10).

7. The display device according to one of the previous claims, **characterized in that** the holder (7) can be shifted in order to display the laser beam (11, 11') selectively on one of the two sides of the motor saw (2) while retaining the set angle (α).

8. The display device according to one of the previous claims, **characterized in that** the direction of the laser beam and/or of the laser (8) can be adjusted with a rotary knob.

9. The display device according to one of the previous claims, **characterized in that** the laser (8) is arranged on the motor saw (2) in such a manner that it is protected against shocks and/or vibrations.

10. The display device according to one of the previous claims, **characterized in that** the adapter (24) comprises a rotary device corresponding to the laser carrier (20).

11. The display device according to one of the previous claims, **characterized in that** a current supply and/or a switch (14) is/are arranged on the laser carrier (20).

12. The display device according to one of the previous claims, **characterized in that** the laser carrier (20) surrounds the adapter (24).

13. The display device according to one of the previous claims, **characterized in that** the laser carrier (20) is designed divisible.

14. The display device according to one of the previous claims, **characterized in that** the touch-control switch (14) is arranged in an ergonomically favourable manner on the holder (7).

15. Utilization of a display device according to one of the claims 1 to 14 on a motor saw (2) comprising a saw blade (3) as tool, a first handle (4) in an extension of the tool and a second handle (6) arranged substantially transversely to the tool for holding the motor saw (2).

16. Utilization according to Claim 15, **characterized in that** the laser beam and/or the laser (8) is/are selectively directed to the one or the other side of the tool axis (10) by rotation about a point of rotation arranged in the tool axis (10).

17. Utilization according to one of the previous claims, **characterized in that** the laser (8) is arranged at a large interval from the motor (5) of the motor saw (2).

18. Utilization according to one of the previous claims, **characterized in that** the laser (8) is arranged on the end of the motor saw (2) facing away from the tip of the tool (3).

19. Utilization according to one of the previous claims, **characterized in that** the laser (8) is arranged in a housing niche of the motor saw (2).

20. Utilization according to one of the previous claims, **characterized in that** the touch-control switch (14) is arranged in an ergonomically favourable manner on the first handle (4).

## Revendications

1. Appareil indicateur pour la fixation à une scie à moteur (2), laquelle comporte une lame (3) de scie égoïne comme outil, une première poignée (4) en prolongement de l'outil et une deuxième poignée (6) disposée de manière essentiellement perpendiculaire à l'outil pour permettre de tenir la scie à moteur (2),
■ dans laquelle l'appareil indicateur est doté d'un laser (8) avec un rayon laser activable,
■ lequel rayon laser à la scie à moteur (2) est orienté en un angle (α) supérieur à 0° et inférieur à 90°, de préférence inférieur à 45°, par rapport à l'axe de l'outil (10), et
■ l'appareil indicateur comporte un porte-laser (20),
**caractérisé en ce que**,
■ l'appareil indicateur comporte un adaptateur (24), lequel est relié de manière amovible au porte-laser (20) et se présente sous une forme permettant la fixation du laser (8) à l'extrémité éloignée de l'outil de la première poignée (4),
■ le rayon laser et/ou le laser (8) peuvent/peut être orienté(s) au choix vers l'un ou l'autre côté de l'axe de l'outil (10), et
■ que le laser (8) est un laser à lignes.

2. Appareil indicateur selon la revendication 1, **caractérisé en ce que** le rayon laser est dévié par un miroir.

3. Appareil indicateur selon l'une quelconque des revendications précédentes, **caractérisé en ce que** le laser (8) est actionné par un commutateur à impulsion.

4. Appareil indicateur selon l'une quelconque des revendications précédentes, **caractérisé en ce que** le laser (8) est disposé de manière réglable à une console (7) pour ce qui est de son angle (α).

5. Appareil indicateur selon l'une quelconque des revendications précédentes, **caractérisé en ce que** des marques et/ou des tramages sont disposés à la console (7) pour le réglage de l'angle (α) ou une distance prédéterminée (D).

6. Appareil indicateur selon l'une quelconque des revendications précédentes, **caractérisé en ce que** la console (7) est montée de manière rotative et que l'axe de rotation (9) est situé de préférence dans l'axe de l'outil (10).

7. Appareil indicateur selon l'une quelconque des revendications précédentes, **caractérisé en ce que** la console (7) est montée de manière ajustable pour diriger le rayon laser (11, 11') au choix vers l'un des deux côtés de la scie à moteur (2) tout en maintenant l'angle réglé (α).

8. Appareil indicateur selon l'une quelconque des revendications précédentes, **caractérisé en ce que** la direction du rayon laser et/ou du laser (8) est réglable par un bouton rotatif.

9. Appareil indicateur selon l'une quelconque des revendications précédentes, **caractérisé en ce que** le laser (8) est monté à la scie à moteur (2) de manière à être protégé des chocs et/ou des vibrations.

10. Appareil indicateur selon l'une quelconque des revendications précédentes, **caractérisé en ce que** l'adaptateur (24) comporte un dispositif de virage correspondant au porte-laser (20).

11. Appareil indicateur selon l'une quelconque des revendications précédentes, **caractérisé en ce que** l'alimentation en courant électrique et/ou des commutateurs sont disposés au porte-laser (20).

12. Appareil indicateur selon l'une quelconque des revendications précédentes, **caractérisé en ce que** le porte-laser (20) entoure l'adaptateur (24).

13. Appareil indicateur selon l'une quelconque des revendications précédentes, **caractérisé en ce que** le porte-laser (20) se présente sous une forme divisible.

14. Appareil indicateur selon l'une quelconque des revendications précédentes, **caractérisé en ce que** le commutateur à impulsion (14) est disposé de manière ergonomique à la console (7).

15. Utilisation d'un appareil indicateur selon l'une quelconque des revendications 1 à 14 à une scie à moteur (2), laquelle comporte une lame (3) de scie égoïne comme outil, une première poignée (4) en prolongement de l'outil et une deuxième poignée (6) disposée de manière essentiellement perpendiculaire à l'outil pour permettre de tenir la scie à moteur (2).

16. Utilisation selon la revendication 15, **caractérisée en ce que** le rayon laser et/ou le laser (8) sont/est orienté(s) au choix sur l'un ou l'autre côté de l'axe d'outil (10) par rotation autour d'un point de rotation situé dans l'axe d'outil (10).

17. Utilisation selon l'une quelconque des revendications précédentes, **caractérisée en ce que** le laser (8) est disposé à une grande distance du moteur (5) de la scie à moteur (2).

18. Utilisation selon l'une quelconque des revendications précédentes, **caractérisée en ce que** le laser (8) est disposé à l'extrémité de la scie à moteur (2) éloignée de l'extrémité de l'outil (3).

19. Utilisation selon l'une quelconque des revendications précédentes, **caractérisée en ce que** le laser (8) est disposé dans une niche du carter de la scie à moteur (2).

20. Utilisation selon l'une quelconque des revendications précédentes, **caractérisée en ce que** le commutateur à impulsion (14) est disposé de manière ergonomique à la première poignée (4).
